# FASCICULE DE BREVET EUROPEEN

(11) **EP 1 671 875 B1**
(45) Date de publication et mention de la délivrance du brevet: **21.02.2007**
(21) Numéro de dépôt: 04293025.5
(22) Date de dépôt: 17.12.2004
(51) Int. Cl.: B62D 65/00, B62D 65/18, B61C 13/04, B61B 10/02, B61B 10/04, B23Q 11/08

(54) **Dispositif et procede anti-collision de ligne de montage**
Antikollisionsvorrichtung und Verfahren für eine Montagestrasse
Anticollison device and method for an assembly line

(43) Date de publication de la demande: 21.06.2006
(73) Titulaire: Cinetic Conveying & Assembly, 77772 Marne-La-Vallee Cedex 4 (FR)
(72) Inventeur: Resseguier, Dominique, 94300 Vincennes (FR); Courillon, Olivier, 92310 Sevres (FR)
(74) Mandataire: Hirsch & Associés

(56) Documents cités:
- EP-A- 1 029 631
- GB-A- 2 006 150
- US-A- 4 646 915
- US-A- 5 134 940

## Description

La présente invention concerne un dispositif et un procédé anti-collision de ligne de montage, en particulier de véhicule.

Pour charger un véhicule sur une ligne de montage, les véhicules peuvent être conduits jusqu'à la ligne de montage ; le long de cette ligne, des opérateurs de montage interviennent pour monter les véhicules. Or, il se peut qu'un véhicule arrive à la ligne avec une vitesse trop importante due par exemple à l'inattention du conducteur ou à des freins défectueux. Ce type d'incident peut en particulier se produire sur une ligne de montage sur laquelle des opérateurs effectuent sur les véhicules d'ultimes vérifications, telles que des vérifications quant à la présence de rainures sur la carrosserie. Les véhicules sont aptes à être conduits. Il risque alors de se produire une collision entre le véhicule arrivant et un opérateur intervenant sur la ligne de montage ; la collision peut aussi se produire en chaîne, le véhicule arrivant percutant un véhicule déjà présent, ce dernier véhicule pouvant alors percuter un opérateur intervenant sur la chaîne. Ceci peut entraîner la blessure voire la mort de l'opérateur.

Il y a donc un besoin de sécurité accrue sur les lignes de montage, en particulier sur les lignes de montage de véhicule.

Pour cela, l'invention se rapporte à un dispositif anti-collision de véhicule sur une ligne de montage comprenant un passage de véhicule, une zone d'isolement de véhicule le long du passage, et deux butées d'obturation du passage, les butées définissent entre elles la zone d'isolement.

Selon un mode de réalisation, au moins l'une des butée obture le passage.

Selon un mode de réalisation, un seul véhicule à la fois est susceptible d'être dans la zone d'isolement.

Selon un mode de réalisation, au moins l'une des butées est mobile entre une position escamotée et une position d'obturation du passage.

Selon un mode de réalisation, un sens de circulation est défini le long du passage de véhicule, la butée située en amont du passage étant mobile.

Selon un mode de réalisation, une butée est fixe.

Selon un mode de réalisation, les deux butées sont mobiles entre une position escamotée et une position d'obturation du passage.

Selon un mode de réalisation, le dispositif comprend des organes de guidage du véhicule dans la zone d'isolement.

L'invention se rapporte aussi à une ligne de montage comprenant le dispositif anti-collision décrit ci-dessus, le dispositif étant à l'entrée de la ligne de montage.

L'invention se rapporte également à un procédé anti-collision de véhicule pour la ligne de montage ci-dessus, le procédé comprenant une étape d'isolement d'un véhicule dans la zone d'isolement avant une étape de transfert du véhicule sur la ligne de montage.

Selon un mode de réalisation, au moins une des butées obture le passage de véhicule lorsque les étapes d'isolement et de transfert sont effectuées.

Selon un mode de réalisation, les butées sont chacune mobiles entre une position escamotée et une position d'obturation du passage, une butée étant passée en position escamotée seulement lorsque l'autre butée est en position d'obturation.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue de dessus d'une portion de ligne de montage ;
- figure 2, un synoptique représentant le transfert d'une véhicule sur la ligne de montage.

L'invention se rapporte à un dispositif anti-collision de véhicule sur une ligne de montage. Ce dispositif comprend un passage de véhicule, et une zone d'isolement le long du passage. Le dispositif comprend en outre deux butées d'obturation du passage, les butées définissant entre elles la zone d'isolement. Le dispositif a pour effet de garantir l'arrêt du véhicule entrant dans la ligne ; le dispositif assure ainsi la sécurité des opérateurs intervenant sur la ligne de montage.

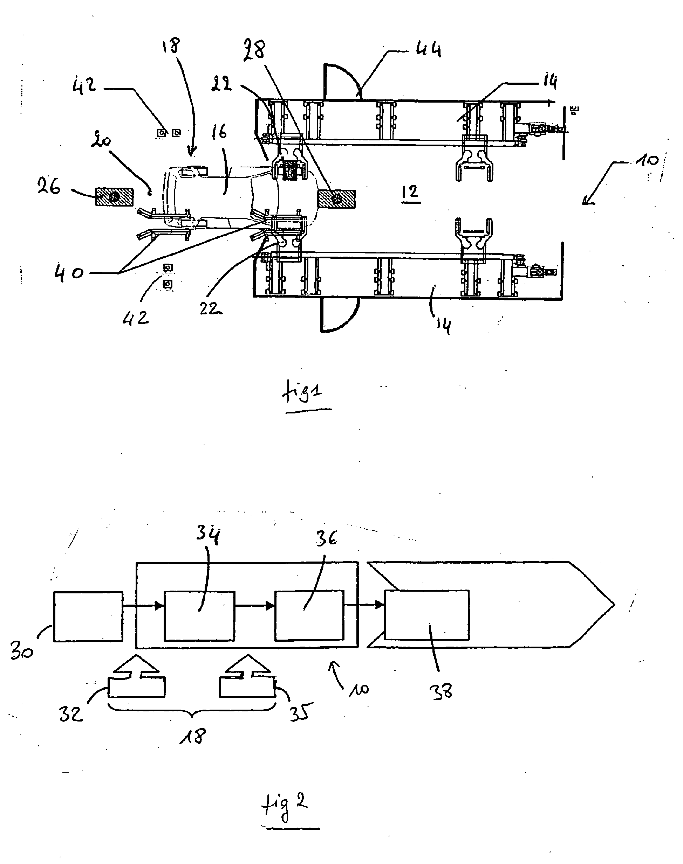

La figure 1 montre une vue de dessus d'une portion de ligne 10 de montage. Par ligne de montage, on entend toute ligne de travail, que ce soit pour de l'assemblage de pièces ou pour le contrôle et la vérification des objets fabriqués. Ainsi, il peut s'agir d'une ligne de contrôle final de véhicules automobiles, lesdits véhicules étant susceptibles d'être conduits par les opérateurs jusqu'à ladite ligne.

La ligne 10 comprend un dispositif 18 anti-collision. Le dispositif 18 est positionné à l'entrée de la ligne de montage de sorte à obliger les véhicules à passer par la zone d'isolement ; ceci permet d'empêcher la collision entre un véhicule parvenant à la ligne avec une vitesse élevée et des opérateurs ou d'autres véhicules déjà présents sur la ligne. Le dispositif 18 permet l'isolement entre d'une part une zone de travail proprement dite au sein de la ligne de montage et d'autre part une zone de conduite extérieure à la ligne de montage. Le dispositif arrête tout véhicule s'approchant trop rapidement, sans que l'arrêt du véhicule se répercute sur les véhicules déjà présents sur la zone de travail.

Le dispositif 18 comprend un passage 12 de véhicule qui se confond avec le passage de véhicule de la ligne. Un véhicule 16 est susceptible de s'avancer le long du passage 12 de façon automatique.

Le dispositif 18 comprend une zone 20 d'isolement du véhicule 16. Cette zone est le long du passage 12, si bien que tout véhicule parvenant à la ligne de montage passe par la zone d'isolement. La zone d'isolement 20 est définie par deux butées 26 et 28. Les butées 26, 28 sont susceptibles d'obturer le passage 12. Ainsi, un véhicule dans le passage 12 menant à la zone de travail de la ligne de montage ne peut franchir la zone d'isolement en passant outre les butées 26, 28. Une collision entre un véhicule et les butées 26, 28 a pour conséquence d'arrêter le véhicule. Un véhicule ayant subi une collision est susceptible d'être dirigé vers une ligne de réparation.

Un sens de circulation est défini le long du passage 12 ; sur la figure 1, ce sens correspond à un déplacement du véhicule 16 de gauche à droite. Ainsi, les butées 26, 28 sont décalées le long du passage, la butée 26 étant en amont et la butée 28 étant en aval. Les deux butées 26, 28 encadrent la zone 20 d'isolement.

La figure 2 montre un synoptique représentant le transfert d'un véhicule sur la ligne de montage. Ce synoptique montre un procédé anti-collision de véhicule. La sécurité offerte par le dispositif 18 peut être décrite à l'aide de ce synoptique de la manière suivante. En fin de montage, les véhicules subissent un ultime contrôle le long de la ligne 10. Les véhicules peuvent être conduits dans une zone de circulation par des opérateurs jusqu'à la ligne 10 où les véhicules sont contrôlés les uns après les autres par des opérateurs présents autour des véhicules. Un opérateur conduit le véhicule jusqu'à la station d'entrée référencée 30 sur la figure 2, correspondant à l'entrée du dispositif 18 et de la ligne 10. La butée 26 oblige l'arrêt référencé 32 du véhicule, protégeant les opérateurs intervenant sur la ligne.

Ensuite, le procédé comprend une étape d'isolement 34, par laquelle le véhicule arrivant est placé et arrêté dans la zone d'isolement. Dans cette zone d'isolement, la butée 28 oblige l'arrêt référencé 35 du véhicule 16, protégeant les opérateurs intervenant sur la ligne. De même, dans la zone d'isolement, la butée 26 empêche un autre véhicule parvenant de l'allée de circulation de percuter le véhicule présent dans la zone d'isolement et de le propulser dans la ligne de montage. Encore une fois les opérateurs sont protégés. Par ailleurs, il est envisageable qu'un opérateur ait conduit le véhicule jusqu'à la station 30 puis jusque dans la zone 20 d'isolement, où l'opérateur quitte le véhicule. Lorsque l'opérateur quitte le véhicule, les butées 26, 28 encadrent le véhicule et interdisent tout mouvement du véhicule incontrôlé dans un sens ou l'autre ; l'opérateur est donc protégé lorsqu'il quitte le véhicule.

De la zone d'isolement, le procédé comprend ensuite une étape 36 de transfert plus en avant vers la ligne de montage 10. Il peut être prévu que le véhicule soit transféré par un convoyeur mécanique. Il n'y a alors plus de conducteur dans le véhicule. Un exemple de convoyeur 22 est représenté sur la figure 1. Il peut par exemple s'agir de bras de préhension des roues du véhicule, entraînant en roulement le véhicule le long de la ligne. Il peut aussi s'agir d'un convoyeur aérien, soulevant le véhicule le long d la ligne. Le procédé peut ensuite comprendre une étape 38 de mise en référence du véhicule.

Le procédé et le dispositif permettent donc d'obliger le véhicule à un isolement dans une zone ou sas d'isolement avant le transfert vers une zone de travail d'une ligne de montage où les opérateurs peuvent intervenir en toute sécurité entre les véhicules.

De préférence, un seul véhicule à la fois est susceptible d'être dans la zone d'isolement. Ceci permet d'éviter toute percussion entre des véhicules au sein de la zone d'isolement 20.

Les butées peuvent être réalisées de différentes manières. Indépendamment l'une de l'autre, les butées 26, 28 peuvent être mobiles ou immobiles. Quelles que soient les combinaisons de mobilité ou d'immobilité des butées 26, 28, provision est faite qu'au moins l'une des butées 26, 28 obture le passage 12. La présence d'une butée toujours en position d'obturation permet d'isoler la zone de circulation par laquelle les véhicules sont approchés de la ligne 10 de la zone de travail proprement dite de la ligne 10 où des opérateurs interviennent.

On peut envisager que les deux butées 26, 28 sont immobiles, fixes, en position d'obturation ; les véhicules sont transportés de la zone de circulation à la zone d'isolement puis de la zone d'isolement à la zone de travail par exemple par un convoyeur aérien. Cette solution présente l'avantage de garantir l'obturation permanente du passage par les deux butées 26, 28.

Aussi, on peut prévoir qu'au moins l'une des butées peut être mobile entre une position escamotée et une position d'obturation du passage. Par exemple, selon le sens de circulation de la figure 1 le long du passage 12, seule la butée 26 amont peut être mobile. Ainsi, un véhicule est conduit par un opérateur jusqu'à la butée 26 en position d'obturation du passage 12 ; cette butée 26 arrête le véhicule si ce dernier roule trop vite. Une fois la zone d'isolement 20 libérée par le véhicule précédent, la butée 26 est passée de la position d'obturation à la position escamotée, libérant le passage 12 ; la butée 28 avale est en position d'obturation. L'opérateur conduit alors le véhicule dans la zone d'isolement. Si la vitesse est excessive, le véhicule est arrêté par la butée 28 avale. Le véhicule peut ensuite être chargé plus en avant sur la ligne de montage par un convoyeur aérien. Ce mode de réalisation permet une installation du dispositif anti-collision sur une ligne de montage déjà en activité, et sur laquelle il est prévu le soulèvement du véhicule, par exemple pour un contrôle sous le véhicule des opérateurs.

Ainsi, dans ces deux manières de réaliser les butées, une des butées est fixe, immobile, ce qui permet de garantir l'obturation permanente du passage par l'une ou l'autre des deux butées 26, 28.

De préférence, les deux butées d'obturation sont mobiles entre une position escamotée et une position d'obturation du passage. Ceci présente l'avantage de permettre au véhicule de se déplacer aisément le long du passage 12. Ce mode de réalisation permet une installation du dispositif anti-collision sur une ligne de montage déjà en activité, et sur laquelle le véhicule n'est pas soulevé.

Dans ce dernier mode de réalisation, au moins l'une des butées 26, 28 est en position d'obturation. Ainsi, une butée est passée en position escamotée seulement lorsque l'autre butée est en position d'obturation.

Ce dernier mode de réalisation est mis en oeuvre par exemple de la manière suivante. Initialement la zone d'isolement comprend un véhicule et la ligne de montage comprend elle aussi un véhicule en cours de contrôle ; les butées 26, 28 sont en position d'obturation. Dans la zone de circulation, un opérateur conduit un véhicule 16 jusqu'à la butée 26, où le véhicule 16 doit être arrêté (station d'entrée 30 sur la figure 2) ; s'il advient que la vitesse du véhicule est trop importante, une collision se produit entre le véhicule et la butée, arrêtant alors le mouvement du véhicule. La collision du véhicule avec la butée 26 n'a pas d'incidence sur le véhicule présent dans la zone d'isolement ni sur le véhicule présent sur la ligne de montage. Si la collision entre le véhicule endommage le véhicule, ce dernier est retiré pour être réparé.

Une fois le véhicule présent sur la ligne de montage évacué, la butée 28 avale est passée de sa position d'obturation à sa position escamotée. La butée 28 n'entrave plus le passage du véhicule présent dans la zone d'isolement 20 ; le véhicule présent dans la zone d'isolement subit une étape de transfert sur la ligne de montage. Lors de ce transfert, la butée 26 amont est toujours en position d'obturation, permettant d'isoler d'une part la zone d'isolement et la zone de travail de la ligne de montage et d'autre part la zone de circulation ; ainsi, toute collision dans la zone de circulation n'a pas de répercussion dans la zone de travail, ce qui permet de protéger les opérateurs intervenant dans la zone de travail.

Après que le véhicule présent dans la zone d'isolement a été transféré sur la ligne de travail, la butée 28 avale est passée de sa position escamotée à sa position d'obturation. La zone 20 d'isolement est vide et les deux butées 26, 28 sont à nouveau en position d'obturation. La butée 26 aval est alors passée de sa position d'obturation à sa position escamotée, libérant l'accès à la zone d'isolement 20. Le véhicule en station d'entrée 30 subit alors une étape d'isolement en étant conduit par un opérateur dans la zone d'isolement ; la butée 28 avale étant en position d'obturation, la zone de travail de la ligne de montage est isolée de la zone de circulation et de la zone d'isolement ; toute collision dans ces deux dernières zones n'a pas de répercussion dans la zone de travail, ce qui permet de protéger les opérateurs intervenant dans la zone de travail.

Une fois le véhicule présent en zone de d'isolement 20, la butée 26 amont est passée de sa position escamotée à sa position d'obturation. Les deux butées 26, 28 sont alors en position d'obturation. Le véhicule dans la zone d'isolement est isolé d'une part de la zone de travail et d'autre part de la zone de circulation. L'étape de transfert du véhicule sur la zone de travail de la ligne de montage décrite ci-dessus se répète.

Ainsi, par la zone d'isolement et les butées, le dispositif définit un sas de sécurité. Le sas est à l'entrée de la ligne de montage. Le sas offre une zone tampon entre une zone de circulation automobile autour de la ligne de montage et la zone de travail proprement dite le long de la ligne de montage. Les incidents de collision dans la zone de circulation sont sans incidences sur la zone de travail, ce qui permet de protéger les opérateurs intervenant sur la zone de travail.

La cadence de déplacement des butées et d'introduction des véhicule dans la zone d'isolement est réglée sur la cadence de passage des véhicules à travers la ligne de montage. Ainsi, le dispositif ne réduit pas la cadence de la ligne de montage.

Les butées 26, 28 sont dimensionnées pour résister à une collision par un véhicule. Les butées sont par exemple des plots fixes ou mobiles ; dans la version mobile, les plots peuvent par exemple se déplacer en translation en s'enfonçant dans le sol pour atteindre la position escamotée. Les butées peuvent aussi être des barrières fixes ou mobiles ; dans la version mobile, les barrières peuvent par exemple se déplacer par basculement pour atteindre la position escamotée. Bien entendu, des combinaisons de différents types de butées sont possibles, par exemple l'une des butées étant une barrière, l'autre un plot. Les butées peuvent aussi être des ponts basculants.

La figure 1 montre aussi des boutons 42. Les boutons 42 sont par exemple au niveau de la zone 20 d'isolement ; ainsi, lorsque un véhicule a été introduit dans le zone d'isolement par un opérateur, ce dernier quitte le véhicule et enclenche lui-même l'étape de transfert du véhicule en pressant les boutons 42. Assurance est faite que l'opérateur a quitté le véhicule avant que ce dernier soit transféré vers la zone de travail. Les boutons 42 comprennent aussi un bouton d'arrêt d'urgence.

Le dispositif 18 peut aussi comprendre des organes 40 de guidage du véhicule dans la zone d'isolement. Les organes permettent de disposer le véhicule dans une position facilitant le transfert sur la ligne de montage. Les organes 32 de guidage sont par exemple des rails de guidage des roues du véhicules.

Sur la figure 1, sont aussi représentés des protections 44 légères ; ces protections protègent les opérateurs des éléments mécaniques en mouvement. Les protections sont par exemple formées par des encagements tels que des panneaux grillagés et des potelets.

Le dispositif anti-collision présente aussi l'avantage d'être simple à installer. Le dispositif peut être monté sur une ligne de montage déjà existante. Par exemple, il est aisé d'installer la butée 26 fixe sur une ligne de montage le long de laquelle le véhicule est soulevé ; on prévoit alors une hauteur de butée qui permet d'une part la collision avec le véhicule si ce dernier parvenait à une vitesse excessive sur la ligne de montage et d'autre part qui permet au véhicule soulevé par le convoyeur de passer au-dessus de la butée.

## Revendications

1. Un dispositif (18) anti-collision de véhicule sur une ligne (10) de montage comprenant
- un passage (12) de véhicule
- une zone (20) d'isolement de véhicule le long du passage (12), et
- deux butées (26, 28) d'obturation du passage, les butées (26, 28) définissent entre elles la zone (20) d'isolement.

2. Le dispositif selon la revendication 1, **caractérisé en ce que** au moins l'une des butée (26, 28) obture le passage (12).

3. Le dispositif selon la revendication 1 ou 2, **caractérisé en ce qu'**un seul véhicule à la fois est susceptible d'être dans la zone (20) d'isolement.

4. Le dispositif selon l'une des revendications 1 à 3, **caractérisé en ce qu'**au moins l'une des butées (26, 28) est mobile entre une position escamotée et une position d'obturation du passage.

5. Le dispositif selon la revendication 4, **caractérisé en ce qu'**un sens de circulation est défini le long du passage (12) de véhicule, la butée (26) située en amont du passage (12) étant mobile.

6. Le dispositif selon l'une des revendications 1 à 5, **caractérisé en ce qu'**une butée est fixe.

7. Le dispositif selon l'une des revendications 1 à 5, **caractérisé en ce que** les deux butées (26, 28) sont mobiles entre une position escamotée et une position d'obturation du passage.

8. Le dispositif selon l'une des revendications 1 à 7, **caractérisé en ce que** le dispositif comprend des organes de guidage du véhicule dans la zone d'isolement.

9. Le dispositif selon l'une des revendications précédentes, **caractérisé en ce que** le dispositif est adapté à isoler une ligne de montage d'une zone de circulation des véhicules approchant la ligne de montage.

10. Une ligne (10) de montage comprenant le dispositif (18) anti-collision selon l'une des revendications 1 à 9, le dispositif (18) étant à l'entrée de la ligne de montage et isolant la ligne de montage d'une zone de circulation en amont de la ligne de montage.

11. Procédé anti-collision de véhicule pour la ligne de montage selon la revendication 10,
le procédé comprenant une étape d'isolement d'un véhicule dans la zone d'isolement avant une étape de transfert du véhicule sur la ligne de montage.

12. Le procédé selon la revendication 11, **caractérisé en ce qu'**au moins une des butées obture le passage de véhicule lorsque les étapes d'isolement et de transfert sont effectuées.

13. Le procédé selon la revendication 11 ou 12, **caractérisé en ce que** les butées sont chacune mobiles entre une position escamotée et une position d'obturation du passage, une butée étant passée en position escamotée seulement lorsque l'autre butée est en position d'obturation.

14. Le procédé selon l'une des revendications 11 à 13, **caractérisé en ce qu'**il comprend en outre, avant l'étape d'isolement, une étape de conduite de véhicule par un conducteur jusqu'à la ligne de montage.

## Claims

1. A vehicle anti-collision device (18) on an assembly line (10) comprising
- a passage (12) for a vehicle
- a zone (20) isolating the vehicle along the passage (12), and
- two stops (26, 28) blocking off the passage, the stops (26, 28) delimiting between them the isolation zone (20).

2. The device according to claim 1, **characterized in that** at least one of the stops (26, 28) blocks off the passage (12).

3. The device according to claim 1 or 2, **characterized in that** only one vehicle at a time is able to be in the isolation zone (20).

4. The device according to one of claims 1 to 3, **characterized in that** at least one of the stops (26, 28) is mobile between a retracted position and a position blocking off the passage.

5. The device according to claim 4, **characterized in that** one direction of circulation is defined along the vehicle passage (12), the stop (26) situated upstream of the passage (12) being mobile.

6. The device according to one of claims 1 to 5, **characterized in that** one stop is fixed.

7. The device according to one of claims 1 to 5, **characterized in that** the two stops (26, 28) are mobile between a retracted position and a position blocking off the passage.

8. The device according to one of claims 1 to 7, **characterized in that** the device comprises elements for guiding the vehicle in the isolation zone.

9. The device according to one of the preceding claims, **characterized in that** the device is designed to isolate an assembly line from a zone for circulation of the vehicles approaching the assembly line.

10. An assembly line (10) comprising the anti-collision device (18) according to one of claims 1 to 9, the device (18) being at the entry to the assembly line and isolating the assembly line from a circulation zone upstream of the assembly line.

11. Vehicle anti-collision method for the assembly line according to claim 10,
the method comprising a stage of isolation of a vehicle in the isolation zone before a stage of transferring the vehicle onto the assembly line.

12. The method according to claim 11, **characterized in that** at least one of the stops blocks off the vehicle passage when the isolation and transfer stages have been carried out.

13. The method according to claim 11 or 12, **characterized in that** the stops are each mobile between a retracted position and a position blocking off the passage, one stop being moved to the retracted position only when the other stop is in the blocking off position.

14. The method according to one of claims 11 to 13, **characterized in that** it also comprises, before the isolation stage, a stage of driving the vehicle by a driver to the assembly line.

## Patentansprüche

1. Antikollisionsvorrichtung (18) für Fahrzeuge auf einer Montagelinie (10), umfassend:
- eine Fahrzeug-Durchfahrt (12);
- ein Fahrzeug-Isolationsbereich (20) entlang der Durchfahrt (12) und
- zwei Sperrbegrenzungen (26, 28), wobei durch die Begrenzungen (26, 28) zwischen diesen der Isolationsbereich (20) definiert wird.

2. Vorrichtung nach Anspruch 1, wobei mindestens eine der Begrenzungen (26, 28) die Durchfahrt (12) sperrt.

3. Vorrichtung nach einem der Ansprüche 1 oder 2, wobei vorgesehen ist, dass sich nur ein Fahrzeug auf einmal in dem Isolationsbereich (20) aufhält.

4. Vorrichtung nach einem der Ansprüche 1-3, wobei mindestens eine der Begrenzungen (26, 28) zwischen einer Umleitungsposition und einer Sperrposition der Durchfahrt beweglich ist.

5. Vorrichtung nach Anspruch 4, wobei eine Fahrtrichtung entlang der Durchfahrt (12) des Fahrzeugs definiert ist, wobei die Begrenzung (26), die vor der Durchfahrt (12) liegt, beweglich ist.

6. Vorrichtung nach einem der Ansprüche 1-5, wobei eine Begrenzung feststehend ist.

7. Vorrichtung nach einem der Ansprüche 1-5, wobei die zwei Begrenzungen (26, 28) zwischen einer Umleitungsposition und einer Sperrposition der Durchfahrt beweglich sind.

8. Vorrichtung nach einem der Ansprüche 1-7, wobei die Vorrichtung Fahrzeugführungselemente in dem Isolationsbereich umfasst.

9. Vorrichtung nach einem der vorangehenden Ansprüche, wobei die Vorrichtung eingerichtet ist, eine Montagelinie von einem Fahrbereich für sich der Montagelinie nähernde Fahrzeuge zu isolieren.

10. Montagelinie (10) mit der Antikollisionsvorrichtung (18) gemäß einem der Ansprüche 1-9, wobei die Vorrichtung (18) an dem Eingang der Montagelinie vorgesehen ist und die Montagelinie von einem vor der Montagelinie liegenden Fahrbereich isoliert.

11. Fahrzeug-Antikollisionsverfahren für die Montagelinie gemäß dem Anspruch 10, wobei das Verfahren einen Schritt des Isolierens eines Fahrzeugs in der Isolierzone vor einem Schritt des Überführens des Fahrzeugs auf die Montagelinie umfasst.

12. Verfahren nach Anspruch 11, wobei mindestens eine der Begrenzungen die Durchfahrt des Fahrzeugs sperrt, wenn die Schritte des Isolierens und des Überführens ausgeführt werden.

13. Verfahren nach einem der Ansprüche 11 oder 12, wobei die Begrenzungen jeweils zwischen einer Umleitungsposition und einer Sperrposition der Durchfahrt beweglich sind, wobei eine Begrenzung nur in die Umleitungsposition übergeht, wenn sich die andere Begrenzung in der Sperrposition befindet.

14. Verfahren nach einem der Ansprüche 11-13, wobei dieses ferner vor dem Schritt des Isolierens einen Schritt des Führens des Fahrzeugs mittels eines Fahrers bis zu der Montagelinie umfasst.
